# FASCICULE DE BREVET EUROPEEN

(11) **EP 3 849 843 B1**
(45) Date de publication et mention de la délivrance du brevet: **08.03.2023**
(21) Numéro de dépôt: 19765730.7
(22) Date de dépôt: 11.09.2019
(51) Int. Cl.: B60Q 5/00

(54) **VOLANT DE VEHICULE COMPORTANT UN DISPOSITIF DE COMMANDE D'AVERTISSEUR SONORE, VEHICULE AVEC UN TEL VOLANT, PROCEDE D'ASSEMBLAGE D'UN TEL VOLANT**
FAHRZEUGLENKRAD MIT EINER HUPENSTEUERUNGSVORRICHTUNG, FAHRZEUG MIT SOLCH EINEM LENKRAD, VERFAHREN ZUR MONTAGE SOLCH EINES LENKRADS
VEHICLE STEERING WHEEL COMPRISING A HORN CONTROL DEVICE, VEHICLE WITH SUCH A STEERING WHEEL, METHOD FOR ASSEMBLING SUCH A STEERING WHEEL

(30) Priorité: 13.09.2018 FR 1858203
(43) Date de publication de la demande: 21.07.2021
(73) Titulaire: Autoliv Development AB, 447 83 Vårgårda (SE)
(72) Inventeur: BERTRAND, Olivier, 16240 Courcome (FR); DOURSOUX, Hugues, 86190 Latille (FR); LETIERCE, Thomas, 86580 Vouneuil s/Biard (FR)
(74) Mandataire: Poindron, Cyrille
(86) Numéro de dépôt international: PCT/EP2019/074170
(87) Numéro de publication internationale: WO 2020/053248

(56) Documents cités:
- EP-A1- 1 669 255
- JP-A- 2015 231 841
- JP-A- 2017 197 185
- US-A1- 2013 076 011
- US-A1- 2017 036 687

## Description

La présente invention concerne de manière générale un volant de véhicule automobile comprenant un dispositif de commande d'avertisseur sonore et un dispositif d'amortissement de vibrations.

Il est connu dans l'art antérieur des dispositifs combinant les fonctions d'avertisseur sonore et d'amortisseur de vibrations. Le document WO2017154571 décrit un dispositif dans lequel :
- des bornes d'un avertisseur sonore sont situées sur un support de fixation d'airbag et sur une armature de volant,
- un ressort de rappel de l'avertisseur sonore compresse des moyens d'amortissement.

Le système manque donc de compacité et de simplicité du fait des nombreuses pièces comprises entre les bornes de l'avertisseur sonore et l'efficacité de l'amortisseur de vibration est affectée par la compression constante du ressort de rappel de l'avertisseur sonore, ce qui diminue la capacité d'amortissement.

Dans l'art antérieur des volants, on connaît aussi les documents suivants. Le document US2013076011 A1 se rapporte à un système d'amortissement pour un volant de véhicule. Le document JP2017197185A se rapporte à un volant de véhicule. Le document US2017036687A1 se rapporte à une structure de volant de véhicule. Le document JP2015231841 A se rapporte à une structure de contrôle de vibrations dans un volant de véhicule.

Un but de la présente invention est de répondre aux inconvénients du document de l'art antérieur mentionnés ci-dessus et en particulier, tout d'abord, de proposer un volant dont l'avertisseur sonore est compact et peut absorber des vibrations de manière efficace.

Pour cela un premier aspect de l'invention concerne un volant de véhicule automobile comprenant un dispositif d'avertisseur sonore, le volant comprenant :
- une armature,
- un support de fixation agencé pour recevoir un module de sécurité et mobile par rapport à l'armature entre une position de repos et une position enfoncée,
- des moyens de guidage du support de fixation, comprenant une première partie de guidage solidaire de l'armature, et une deuxième partie de guidage solidaire du support de fixation,
- une partie de circuit électrique d'avertisseur sonore avec au moins un interrupteur comprenant une première borne de contact, agencée sur l'armature, et une deuxième borne de contact, embarquée avec le support de fixation,
- des moyens de rappel élastiques agencés pour exercer automatiquement un effort de rappel sur la deuxième partie de guidage pour la repousser depuis la position enfoncée vers la position de repos,
- des moyens d'amortissement déformables, distincts des moyens de rappel élastiques, positionnés entre le support de fixation et la deuxième partie de guidage,
- la deuxième partie de guidage comprenant une interface de poussée pour recevoir l'effort de rappel des moyens élastique, et intéressant:
   - en ce que l'interface de poussée est agencée entre les moyens de rappel élastiques et les moyens d'amortissement, et
   - en ce que la deuxième borne de contact est supportée par la deuxième partie de guidage.

L'utilisation de la deuxième partie de guidage comme support de la deuxième borne de contact rend le dispositif plus compact et le changement d'état de l'interrupteur plus franc car il n'y a plus de bras de levier entre la deuxième borne de contact et la deuxième partie de guidage.

L'interface de poussée dissociée et distincte des moyens d'amortissement permet d'éviter de faire passer l'effort de rappel par les moyens d'amortissement. Le fait de ne pas compresser de manière constante les moyens d'amortissement par les moyens de rappel élastiques exerçant l'effort de rappel en direct sur la deuxième partie de guidage améliore le comportement des moyens d'amortissement. Ils permettent ainsi un meilleur amortissement des vibrations du volant en utilisant la masse du module de sécurité.

En position de repos, l'avertisseur sonore, aussi communément appelé klaxon, n'est pas activé et n'émet donc aucun signal d'avertissement. Lorsque le support de fixation est en position enfoncée, le klaxon est activé et émet donc un signal d'avertissement

Selon l'invention, les moyens d'amortissement déformables sont distincts des moyens de rappel élastiques et positionnés entre le support de fixation et la deuxième partie de guidage, et l'interface de poussée est agencée entre les moyens de rappel élastiques et les moyens d'amortissement. En conséquence, l'espace axial alloué aux moyens d'amortissement est indépendant de la force du ressort ou de la position du support de fixation.

Selon la mise en oeuvre ci-dessus, l'interface de poussée est agencée entre les moyens de rappel élastiques et les moyens d'amortissement, selon une direction axiale ou de déplacement du support de fixation. Autrement dit, la butée du ressort est en dessous des moyens d'amortissement (un damper en langue anglaise).

Selon la mise en oeuvre ci-dessus, la deuxième borne de contact est supportée par la deuxième partie de guidage, ce qui garantit que des vibrations présentes ou appliquées sur le support ne sont pas transmises aux bornes de contact.

Avantageusement, l'interface de poussée est agencée entre les moyens de guidage ou de rappel élastiques et les moyens d'amortissement, selon une direction radiale ou transverse au déplacement du support de fixation. En conséquence, un diamètre intérieur des moyens d'amortissement est supérieur à un diamètre extérieur des moyens de guidage ou de rappel élastiques ou de la butée (l'interface de poussée).

Avantageusement, la deuxième partie de guidage et/ou une interface de poussée comprend une interface de maintien des moyens de rappel élastiques, comme par exemple une interface en pied de sapin, telle qu'une gorge avec une rebord, agencés pour s'accoupler avec un ressort à boudins.

Avantageusement, les moyens de guidage sont un ou des éléments de guidage.

Avantageusement, les moyens de rappel élastique sont un ou des éléments de rappel élastique.

Avantageusement, les moyens d'amortissement sont un ou des éléments d'amortissement.

Avantageusement, les moyens d'amortissement sont agencés entre la deuxième borne de contact et les moyens de rappel élastiques.

Ce mode de réalisation est encore simplifié et plus compact car il permet d'utiliser la deuxième borne de contact comme support aux moyens d'amortissement.

Avantageusement, les moyens de guidage sont agencés pour guider le support de fixation en translation selon une direction d'activation de l'avertisseur sonore.

Avantageusement, l'interface de poussée est en contact direct avec les moyens de rappel élastiques. Ce mode de réalisation simplifie l'interface en évitant toute pièce intermédiaire.

Avantageusement, l'interrupteur d'avertisseur sonore est dans un état fermé dans la position de repos.

En d'autres termes, dans la position repos, le circuit électrique est fermé. Lors de l'enfoncement du support de fixation, le circuit électrique s'ouvre. Ce changement d'état peut être détecté par une unité de calcul agencée pour déclencher l'émission d'un signal d'avertissement lors d'une ouverture du circuit. Ce type d'activation d'avertisseur sonore est très réactif car la course d'activation est beaucoup plus courte que lorsqu'il faut fermer un circuit. La distance d'activation étant plus courte, cela permet de définir des jeux plus faibles entre les composants mobiles et notamment entre le module de sécurité et des pièces fixes environnantes. Une raideur des moyens de rappel élastiques peut être choisie plus élevée (réduisant le risque de déclanchement intempestif) sans augmenter l'effort nécessaire à l'activation de l'avertisseur sonore.

Avantageusement, la première partie de guidage est une vis comprenant une butée ou un épaulement définissant la position de repos.

Avantageusement, la deuxième partie de guidage est un coulisseau agencé pour coulisser sur la vis.

Avantageusement,
- les moyens d'amortissement sont agencés dans une gorge et entre une première surface d'appui et une deuxième surface d'appui de la deuxième partie de guidage,
- la première surface d'appui étant plus grande que la deuxième surface d'appui,
- la deuxième surface d'appui étant suffisamment petite pour permettre une insertion des moyens d'amortissement dans la gorge,
le volant de véhicule comprenant en outre une cale agencée entre les moyens d'amortissement et la deuxième surface d'appui.

En d'autres termes, la deuxième surface d'appui est suffisamment petite pour permettre l'insertion les moyens d'amortissement mais pas suffisamment grande pour assurer leurs maintiens lorsque l'ensemble du dispositif est assemblé. Pour assurer un maintien en position satisfaisant, une cale est ajoutée de sorte à offrir une surface d'appui plus importante. On comprend aussi qu'une largeur de la gorge est fixe et prédéterminée et non influencée ou modifiée par les moyens de rappel élastiques. Ainsi les moyens d'amortissement sont libres de contraintes exercées directement par les moyens de rappel élastiques.

Avantageusement, la cale présente une surface de contact commune avec les moyens d'amortissement supérieure à la deuxième surface d'appui.

Avantageusement, la cale est agencée pour être assemblée sur la deuxième partie de guidage par clippage ou par l'intermédiaire d'une interface à baïonnette. Par clippage il est entendu assemblage d'une pièce sur une autre ; au moins une des pièces étant déformée élastiquement en cours de l'assemblage avant de retrouver un état moins contraint dans lequel elle est liée à l'autre des deux pièces. C'est donc un assemblage par déformation et retour élastique. On peut aussi qualifier un tel assemblage d'emboîtement élastique.

Ce mode de réalisation permet un assemblage simple et efficace de la cale.

Avantageusement, la première surface d'appui est formée par la deuxième borne de contact.

Avantageusement, la deuxième borne de contact est surmoulée sur la deuxième partie de guidage.

Avantageusement, la première borne de contact est agencée pour être clippée sur la vis selon une direction perpendiculaire à la direction d'activation de l'avertisseur sonore.

Ce mode de réalisation est avantageux car il permet de rendre l'orientation de la première borne de contact par rapport à l'axe de vissage de la vis, indépendant de l'orientation de la vis. La première borne de contact peut être rapportée sur la vis après le vissage de cette dernière.

Avantageusement, la première borne de contact est solidaire d'une interface de clippage isolante de l'électricité, l'interface de clippage comprenant un clip agencé pour clipper la deuxième borne de contact sur la vis.

Ce mode de réalisation permet de proposer un circuit électrique d'avertisseur sonore isolé de l'armature de manière simple. Typiquement, l'interface de clippage comporte deux doigts ou pattes flexibles latéraux avec un évidemment central, pour s'accoupler avec la tige de la vis.

Avantageusement, les moyens de guidage sont composés de deux vis,
la partie de circuit électrique comprenant deux interrupteurs,
le volant comprenant en outre un support de bornes solidaire sur les deux vis, le support de bornes supportant les deux premières bornes de chaque interrupteur.

Cela simplifie les opérations d'assemblage puisque plusieurs bornes sont assemblées aux vis en une seule opération.

Avantageusement, le support de bornes est clippé sur les vis.

Un deuxième aspect de l'invention concerne un véhicule automobile comprenant un volant de véhicule selon le premier aspect de l'invention.

Un troisième aspect de l'invention concerne un procédé d'assemblage d'un volant selon le premier aspect de l'invention, comprenant les étapes de :
- compresser les moyens de rappel élastiques de sorte à positionner le support de fixation dans la position enfoncée,
- visser la vis,
- clipper la première borne de contact sur la vis de sorte à la première borne de contact selon une direction prédéterminée,
- libérer les moyens de rappel élastiques que sorte à fermer l'interrupteur.

Ce procédé est avantageux pour l'assemblage d'un dispositif avertisseur sonore normalement fermé car en utilisant une vis comme butée du dispositif d'avertisseur sonore, il permet de s'affranchir de l'effet de la rotation de la vis sur l'orientation finale de la première borne de contact par rapport à l'armature. En effet, pour garantir un câblage ultérieur du dispositif d'avertisseur sonore, il est préférable que la première borne de contact soit toujours orientée de la même manière par rapport à l'armature du volant pour éviter tout risque d'interférence avec des pièces environnantes. Le procédé proposé présente cet avantage puisque la borne de contact est rapportée sur la vis seulement après que celle-ci soit vissée. La borne de contact peut donc être facilement positionnée selon une orientation prédéterminée. La borne de contact étant clippée, le procédé est simple et rapide.

Avantageusement, le procédé comprend l'étape d'assembler le support de fixation avec les moyens d'amortissement, la deuxième partie de guidage, la deuxième borne et les moyens de rappel élastiques.

D'autres caractéristiques et avantages de la présente invention apparaîtront plus clairement à la lecture de la description détaillée qui suit de plusieurs modes de réalisation de l'invention donnés à titre d'exemples nullement limitatifs et illustrés par les dessins annexés, dans lesquels :
- la figure 1 représente une vue éclatée en trois dimensions d'un premier mode de réalisation de volant équipé d'un dispositif de commande d'avertisseur sonore.
- la figure 2 représente une vue de détails en coupe du volant de la figure 1 avec le dispositif de commande d'avertisseur sonore en position de repos.
- la figure 3 représente une vue éclatée en trois dimensions du dispositif de commande d'avertisseur sonore.

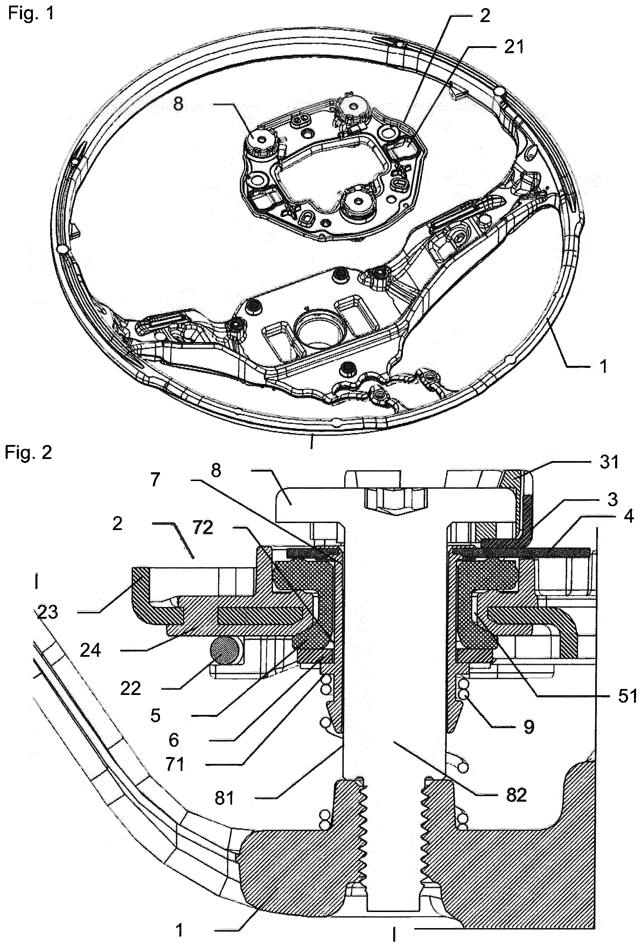

La figure 1 représente une armature 1 de volant sur laquelle vient se fixer un support de fixation 2 par l'intermédiaire de trois vis 8 déjà engagées dans le support de fixation 2. Le support de fixation 2 est agencé pour recevoir un module de sécurité, autrement appelé airbag, non représenté, dans deux ouvertures 21. Les deux ouvertures 21 reçoivent deux crochets de retenus de l'airbag qui est alors retenu sur le support de fixation 2 par l'intermédiaire d'un jonc élastique 22 visible sur la figure 2.

La figure 2 représente une vue partielle en coupe suivant un plan passant par un axe de vissage 82 d'une des vis. Sur cette figure, le support de fixation 2 est en position repos. En d'autres termes, l'avertisseur sonore, autrement appelé klaxon, n'est pas activé.

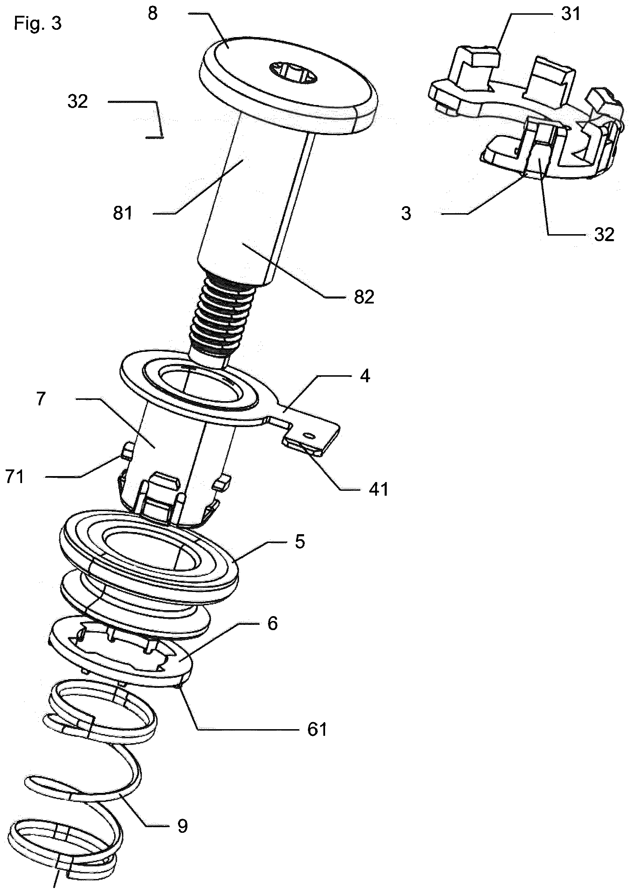

Sur l'armature 1 est montée la vis 8 à tête épaulée formant une butée au dispositif d'avertisseur sonore. Sur la tête épaulée est clippé la première borne de contact 3 par l'intermédiaire d'une interface de clippage 31 isolante. La première borne de contact 3 est fabriquée dans un matériau électriquement conducteur. L'interface de clippage 31 isolante permet d'isoler électriquement la première borne de contact 3 de la vis 8 et donc de l'armature du volant. Rapporter la première borne de contact 3 par clippage et notamment par clippage selon une direction 32 détaillée à la figure 3 perpendiculaire à l'axe de vissage 82 de la vis 8 est avantageux car il peut être effectué après le vissage complet de la vis 8. Ainsi l'orientation finale de la première borne de contact 3 n'est pas dépendant de l'orientation finale de la vis 8.

Dans le mode de réalisation représenté, la vis 8 comprend une surface lisse 81 de guidage. La vis 8 est donc la première partie de guidage des moyens de guidage du dispositif. La surface lisse 81 guide une deuxième partie de guidage 7 en translation selon l'axe de vissage 82. La deuxième partie de guidage 7 prend la forme d'une pièce en plastique isolant de l'électricité.

La deuxième partie de guidage 7 comprend une interface de poussée 71 prenant la forme de créneaux, plus visibles à la figure 3, sur lesquels vient prendre appui une première extrémité d'un ressort 9 utilisé comme moyens de rappel élastiques. La deuxième extrémité du ressort 9 étant en appui sur l'armature 1, les créneaux 71 permettent de repousser la deuxième partie de guidage 7 en position de repos, dans le mode de réalisation décrit, en butée sur la tête de vis 8 épaulée.

Le long de la deuxième partie de guidage 7 comprend, à la suite des créneaux 71, une gorge 72 dans laquelle sont positionnés les moyens d'amortissement 5 et une cale 6 permettant de maintenir correctement les moyens d'amortissement 5 dans la gorge 72. Les moyens d'amortissement 5 ont la forme d'une bague annulaire formée par exemple en EPDM. La gorge 72 est formée d'un côté par la deuxième borne de contact 4, qui forme une première surface d'appui et qui est ici surmoulée sur la deuxième partie de guidage, et les créneaux 71 qui forme une deuxième surface d'appui. La deuxième borne de contact 4 est fabriquée dans un matériau électriquement conducteur et comprend une lamelle de contact 41, visible à la figure 3, pour être raccordée au circuit électrique de l'avertisseur sonore.

La surface de la deuxième borne de contact 4 est suffisamment grande pour fournir une surface d'appui satisfaisante aux moyens d'amortissement 5. Les créneaux 71 présentent une surface d'appui satisfaisante au ressort 9 mais plus petite que la surface d'appui proposée par la deuxième borne de contact 4. Cette surface d'appui réduite permet l'insertion des moyens d'amortissement 5 mais n'est cependant pas suffisante pour assurer un maintien correct des moyens d'amortissement 5 lorsque le volant est assemblé. Une surface d'appui complémentaire est donc apportée par la cale 6 qui est assemblée sur la deuxième partie de guidage 7 après l'insertion des moyens d'amortissement 5. Ce montage postérieur de la cale 6 est rendu possible par des créneaux positionnés sur l'intérieur de la cale 6 et mieux visible sur la figure 3. Ces créneaux sont complémentaires de ceux présents sur la deuxième partir de guidage et forment avec ces derniers une interface à baïonnette qui rend possible le montage de la cale 6 par un mouvent de translation puis de rotation par rapport à l'axe de vissage 82. Pour éviter toute éjection de la cale 6 une fois montée, la cale 6 comprend aussi des ergots 61, visible à la figure 3, qui bloquent la rotation de la cale 6 en prenant appui sur les créneaux de l'interface de poussée 71. En alternative la cale 6 peut être clippée sur la vis par un mouvement selon l'axe de vissage 82 ou selon un axe perpendiculaire à celui-ci.

Les moyens d'amortissement 5 sont clippés sur le support de fixation 2. Un jeu radial 51 est prévu entre le support de fixation 2 et les moyens d'amortissement 5 pour permette à ces derniers de se déformer lors de leur insertion sur la deuxième partie de guidage 7 et notamment lors du passage de l'interface de poussée 71. Le support de fixation 2 est formé d'une âme métallique 23 sur laquelle sont surmoulés en plastique différents éléments d'interface 24. Le module airbag non visible est retenu sur le support de fixation 2 par le jonc élastique 22.

Lorsqu'un effort d'activation est appliqué selon une direction d'activation, c'est-à-dire lorsqu'un effort vers l'armature 1 est appliqué sur le module airbag selon un axe parallèle à l'axe de vissage 82 de la vis 8, lui-même sensiblement parallèle à un axe de rotation du volant permettant de modifier l'orientation de roues du véhicule, cela entraine un déplacement du support de fixation 2 qui, du fait des contacts entre
- le support de fixation 2 et les moyens d'amortissement 5,
- les moyens d'amortissement 5 et la cale 6, et
- la cale 6 et l'interface de poussée 71
engendre le déplacement de la deuxième partie de guidage 7, l'ouverture du contact entre les première et deuxième bornes 3, 4 et ainsi l'activation du dispositif d'avertisseur sonore.

Lorsque l'effort sur le module airbag est relâché, le ressort 9 repousse l'ensemble du dispositif vers le haut de la figure entraînant la fermeture du contact entre les première et deuxième bornes 3, 4 et ainsi la désactivation du dispositif d'avertisseur sonore. L'effort de rappel étant appliqué par le ressort 9 sur la deuxième partie de guidage 7 par l'intermédiaire de l'interface de poussée 71 et non pas par l'intermédiaire des moyens d'amortissement 5, les caractéristiques d'amortissement des moyens d'amortissement 5 sont optimisées. En effet, les moyens d'amortissement 5, pour être efficaces, doivent être juste contraints. Cela est réalisé par la cale 6 qui, avec la deuxième borne de contact 4, défini un espace de largeur fixe et prédéterminée; cet espace n'étant pas modifiée par l'effort de rappel généré par le ressort 9. Autrement dit, en position de repos, l'effort de rappel du ressort 9 ne passe pas, ni de manière constante, ni de manière temporaire, par les moyens d'amortissement.

La figure 3 représente une vue éclatée en trois dimensions du dispositif de commande d'avertisseur sonore. Sur cette vue, le support de fixation 2 n'est pas représenté. Cette figure illustre de manière plus détaillée l'interface de clippage 31 isolante. Cette pièce en forme de fer à cheval ou de U refermé présente une ouverture légèrement plus petite qu'un diamètre de la vis 8 sur laquelle il vient se clipper selon une direction 32 sensiblement perpendiculaire à l'axe de vissage 82 de la vis 8. La première borne de contact 3 est maintenue sur l'interface de clippage 31 isolante par plusieurs griffes 32.

L'assemblage du volant comprend les étapes suivantes :
- positionner un sous-ensemble comprenant le support de fixation 2, les moyens d'amortissement 5, la deuxième partie de guidage 4, la cale 6 et les moyens de rappel élastiques ou ressort 9 sur l'armature 1,
- compresser les moyens de rappel élastiques ou ressort 9 de sorte à positionner le support de fixation 2 dans la position enfoncée,
- visser la vis 8,
- clipper la première borne de contact 3 sur la vis 8 de sorte à orienter la première borne de contact 3 selon une direction prédéterminée,
- libérer les moyens de rappel élastiques ou ressort 9.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées. En particulier, le dispositif pourra être adapté à un dispositif d'avertisseur sonore non isolé, c'est-à-dire dont le circuit électrique de l'avertisseur sonore comprend l'armature 1 conductrice du volant alors que la description détaillée précédente s'est concentrée sur un système isolé du fait de la présence de l'interface de clippage 31 isolante et du fait de la deuxième partie de guidage 7 en plastique isolant.

## Revendications

1. Volant de véhicule automobile comprenant un dispositif d'avertisseur sonore, le volant comprenant :
- une armature (1),
- un support de fixation (2) agencé pour recevoir un module de sécurité et mobile par rapport à l'armature (1) entre une position de repos et une position enfoncée,
- des moyens de guidage du support de fixation (2), comprenant une première partie de guidage (8, 81) solidaire de l'armature (1), et une deuxième partie de guidage (7) solidaire du support de fixation (2),
- une partie de circuit électrique d'avertisseur sonore avec au moins un interrupteur comprenant une première borne de contact (3), agencée sur l'armature (1), et une deuxième borne de contact (4), embarquée avec le support de fixation (2),
- des moyens de rappel élastiques agencés pour exercer automatiquement un effort de rappel sur la deuxième partie de guidage (7) pour la repousser depuis la position enfoncée vers la position de repos,
- des moyens d'amortissement (5) déformables, distincts des moyens de rappel élastiques, positionnés entre le support de fixation (2) et la deuxième partie de guidage (7),
- la deuxième partie de guidage (7) comprenant une interface de poussée (71) pour recevoir l'effort de rappel des moyens de rappel élastiques,
- l'interface de poussée (71) étant agencée entre les moyens de rappel élastiques et les moyens d'amortissement (5), et
- la deuxième borne de contact (4) étant supportée par la deuxième partie de guidage (7), **caractérisé en ce que** l'interrupteur d'avertisseur sonore est dans un état fermé dans la position de repos.

2. Volant de véhicule automobile selon la revendication précédente, dans lequel les moyens d'amortissement (5) sont agencés entre la deuxième borne de contact (4) et les moyens de rappel élastiques.

3. Volant de véhicule automobile selon l'une des revendications précédentes, dans lequel la première partie de guidage (8, 81) est une vis (8) comprenant une butée ou un épaulement définissant la position de repos.

4. Volant de véhicule selon la revendication 3, dans lequel la deuxième partie de guidage (7) est un coulisseau agencé pour coulisser sur la vis (8).

5. Volant de véhicule selon l'une des revendications précédentes dans lequel :
- les moyens d'amortissement (5) sont agencés dans une gorge (72) et entre une première surface d'appui et une deuxième surface d'appui de la deuxième partie de guidage (7),
- la première surface d'appui étant plus grande que la deuxième surface d'appui,
- la deuxième surface d'appui étant suffisamment petite pour permettre une insertion des moyens d'amortissement (5) dans la gorge (72),
le volant de véhicule comprenant en outre une cale (6) agencée entre les moyens d'amortissement (5) et la deuxième surface d'appui.

6. Volant suivant la revendication précédente, dans lequel la cale (6) présente une surface de contact commune avec les moyens d'amortissement (5) décalée dans la direction vers la position de repos par rapport à la deuxième surface d'appui.

7. Volant suivant la revendication 5 ou 6, dans lequel la cale (6) est agencée pour être assemblée sur la deuxième partie de guidage (7) par clippage ou par l'intermédiaire d'une interface à baïonnette.

8. Volant de véhicule selon l'une des revendications 5 à 7, dans lequel la première surface d'appui est formée par la deuxième borne de contact (4).

9. Volant de véhicule suivant la revendication 3, dans lequel la première borne de contact (3) est agencée pour être clippée sur la vis (8) selon une direction perpendiculaire à la direction d'activation de l'avertisseur sonore.

10. Volant de véhicule suivant la revendication précédente, dans lequel la première borne de contact (3) est solidaire d'une interface de clippage (31) isolante de l'électricité, l'interface de clippage (31) comprenant un clip agencé pour clipper la première borne de contact (3) sur la vis (8).

11. Volant de véhicule selon l'une des revendications 1 à 3, dans lequel les moyens de guidage sont composés de deux vis (8),
la partie de circuit électrique comprenant deux interrupteurs,
le volant comprenant en outre un support de bornes solidaire sur chaque vis (8), chaque support de bornes supportant la première borne (3) de chaque interrupteur.

12. Volant de véhicule suivant la revendication précédente, dans lequel chaque support de bornes est clippé sur une vis (8).

13. Véhicule automobile comprenant un volant de véhicule selon l'une des revendications précédentes.

14. Procédé d'assemblage d'un volant selon la revendication 3, comprenant les étapes de :
- compresser les moyens de rappel élastiques de sorte à positionner le support de fixation (2) dans la position enfoncée,
- visser la vis (8),
- clipper la première borne de contact (3) sur la vis (8) de sorte à orienter la première borne de contact (3) selon une direction prédéterminée,
- libérer les moyens de rappel élastiques que sorte à fermer l'interrupteur.

## Patentansprüche

1. Kraftfahrzeuglenkrad, umfassend eine Hupenvorrichtung, das Lenkrad umfassend:
- einen Rahmen (1),
- eine Befestigungskonstruktion (2), die angeordnet ist, um ein Sicherheitsmodul aufzunehmen und relativ zu dem Rahmen (1) zwischen einer Ruheposition und einer niedergedrückten Position bewegbar ist,
- Mittel zum Führen der Befestigungskonstruktion (2), umfassend ein erstes Führungsteil (8, 81), das mit dem Rahmen (1) fest verbunden ist, und ein zweites Führungsteil (7), das mit der Befestigungskonstruktion (2) fest verbunden ist,
- einen Teil eines elektrischen Schaltkreises für eine Hupe mit mindestens einem Schalter, umfassend einen ersten Kontaktanschluss (3), der an dem Rahmen (1) angeordnet ist, und einen zweiten Kontaktanschluss (4), der in die Befestigungskonstruktion (2) eingebettet ist,
- elastische Rückstellmittel, die angeordnet sind, um automatisch eine Rückstellkraft auf das zweite Führungsteil (7) auszuüben, um es aus der niedergedrückten Position in Richtung der Ruheposition zurückzustoßen,
- verformbare Dämpfungsmittel (5), die sich von den elastischen Rückstellmitteln unterscheiden und zwischen der Befestigungskonstruktion (2) und dem zweiten Führungsteil (7) angeordnet sind,
- das zweite Führungsteil (7) umfassend eine Abstoßschnittstelle (71), um die Rückstellkraft von den elastischen Rückstellmitteln aufzunehmen, wobei die Abstoßschnittstelle (71) zwischen den elastischen Rückstellmitteln und den Dämpfungsmitteln (5) angeordnet ist, und
- wobei der zweite Kontaktanschluss (4) von dem zweiten Führungsteil (7) getragen wird, **dadurch gekennzeichnet, dass** der Hupenschalter in der Ruheposition in einem geschlossenen Zustand ist.

2. Kraftfahrzeuglenkrad nach dem vorstehenden Anspruch, bei dem die Dämpfungsmittel (5) zwischen dem zweiten Kontaktanschluss (4) und den elastischen Rückstellmitteln angeordnet sind.

3. Kraftfahrzeuglenkrad nach einem der vorstehenden Ansprüche, bei dem das erste Führungsteil (8, 81) eine Schraube (8) ist, umfassend einen Anschlag oder einen Vorsprung, der die Ruhestellung definiert.

4. Fahrzeuglenkrad nach Anspruch 3, bei dem das zweite Führungsteil (7) ein Schiebestück ist, das angeordnet ist, um auf der Schraube (8) zu gleiten.

5. Fahrzeuglenkrad nach einem der vorstehenden Ansprüche, wobei:
- die Dämpfungsmittel (5) in einer Nut (72) und zwischen einer ersten Anliegefläche und einer zweiten Anliegefläche des zweiten Führungsteils (7) angeordnet sind,
- wobei die erste Anliegefläche größer als die zweite Anliegefläche ist,
- wobei die zweite Anliegefläche klein genug ist, um ein Einsetzen der Dämpfungsmittel (5) in die Nut (72) zu ermöglichen,
das Fahrzeuglenkrad ferner umfassend einen Keil (6), der zwischen den Dämpfungsmitteln (5) und der zweiten Anliegefläche angeordnet ist.

6. Lenkrad nach dem vorstehenden Anspruch, bei dem der Keil (6) eine gemeinsame Kontaktfläche mit den Dämpfungsmitteln (5) aufweist, die in Richtung der Ruheposition relativ zur zweiten Anliegefläche versetzt ist.

7. Lenkrad nach Anspruch 5 oder 6, bei dem der Keil (6) angeordnet ist, um an dem zweiten Führungsteil (7) durch Klemmen oder über eine Bajonettschnittstelle montiert zu werden.

8. Fahrzeuglenkrad nach einem der Ansprüche 5 bis 7, bei dem die erste Anliegefläche durch den zweiten Kontaktanschluss (4) gebildet ist.

9. Fahrzeuglenkrad nach Anspruch 3, bei dem der erste Kontaktanschluss (3) in einer Richtung senkrecht zur Betätigungsrichtung der Hupe angeordnet ist, um auf die Schraube (8) geklemmt zu werden.

10. Fahrzeuglenkrad nach dem vorstehenden Anspruch, bei dem der erste Kontaktanschluss (3) mit einer elektrisch isolierenden Klemmschnittstelle (31) fest verbunden ist, die Klemmschnittstelle (31) umfassend einen Clip, der zum Klemmen des ersten Kontaktanschlusses (3) auf die Schraube (8) angeordnet ist.

11. Fahrzeuglenkrad nach einem der Ansprüche 1 bis 3, bei dem die Führungsmittel aus zwei Schrauben (8) bestehen, das Teil der elektrischen Schaltung umfassend zwei Schalter, das Lenkrad ferner umfassend einen mit jeder Schraube (8) fest verbundenen Anschlussträger, wobei jeder Anschlussträger den ersten Anschluss (3) jedes Schalters trägt.

12. Fahrzeuglenkrad nach dem vorstehenden Anspruch, bei dem jeder Anschlussträger auf eine Schraube (8) geklemmt ist.

13. Kraftfahrzeug, umfassend ein Fahrzeuglenkrad nach einem der vorstehenden Ansprüche.

14. Verfahren zum Zusammenbauen eines Lenkrads nach Anspruch 3, umfassend die folgenden Schritte:
- Zusammendrücken der elastischen Rückstellmittel, um die Befestigungskonstruktion (2) in der niedergedrückten Position zu positionieren,
- Schrauben der Schraube (8),
- Klemmen des ersten Kontaktanschlusses (3) auf die Schraube (8), um den ersten Kontaktanschluss (3) in einer vorbestimmten Richtung auszurichten,
- Lösen der elastischen Rückstellmittel, um den Schalter zu schließen.

## Claims

1. A motor vehicle steering wheel comprising an audible warning device, the steering wheel comprising:
- a frame (1),
- an attachment support (2) arranged to receive a safety module and movable relative to the frame (1) between a rest position and a pushed-in position,
- means for guiding the attachment support (2), comprising a first guiding part (8, 81) secured to the frame (1), and a second guiding part (7) secured to the attachment support (2),
- an audible warning electrical circuit part with at least one switch comprising a first contact terminal (3), arranged on the frame (1), and a second contact terminal (4), embedded with the attachment support (2),
- elastic return means arranged to automatically exert a return force on the second guiding part (7) to push it back from the pushed-in position to the rest position,
- deformable damping means (5), separate from the elastic return means, positioned between the attachment support (2) and the second guiding part (7),
- the second guiding part (7) comprising a push-in interface (71) to receive the return force of the elastic return means,
- the push-in interface (71) being arranged between the elastic return means and the damping means (5), and
- the second contact terminal (4) being supported by the second guiding part (7), **characterized in that** the audible warning switch is in a closed state in the rest position.

2. The motor vehicle steering wheel according to the preceding claim, wherein the damping means (5) are arranged between the second contact terminal (4) and the elastic return means.

3. The motor vehicle steering wheel according to one of the preceding claims, wherein the first guiding part (8, 81) is a screw (8) comprising an abutment or a shoulder defining the rest position.

4. The vehicle steering wheel according to claim 3, wherein the second guiding part (7) is a slider arranged to slide over the screw (8).

5. The vehicle steering wheel according to one of the preceding claims wherein:
- the damping means (5) are arranged in a groove (72) and between a first bearing surface and a second bearing surface of the second guiding part (7),
- the first bearing surface being larger than the second bearing surface,
- the second bearing surface being small enough to allow the damping means (5) to be inserted into the groove (72),
the vehicle steering wheel further comprising a shim (6) arranged between the damping means (5) and the second bearing surface.

6. The steering wheel according to the preceding claim, wherein the shim (6) has a common contact surface with the damping means (5) offset in the direction towards the rest position relative to the second bearing surface.

7. The steering wheel according to claim 5 or 6, wherein the shim (6) is arranged to be assembled on the second guiding part (7) by clipping or by means of a bayonet interface.

8. The vehicle steering wheel according to one of claims 5 to 7, wherein the first bearing surface is formed by the second contact terminal (4).

9. The vehicle steering wheel according to claim 3, wherein the first contact terminal (3) is arranged to be clipped onto the screw (8) in a direction perpendicular to the activation direction of the audible warning.

10. The vehicle steering wheel according to the preceding claim, wherein the first contact terminal (3) is secured to an electrically insulating clipping interface (31), the clipping interface (31) comprising a clip arranged to clip the first contact terminal (3) onto the screw (8).

11. The vehicle steering wheel according to one of claims 1 to 3, wherein the guiding means are composed of two screws (8), the electrical circuit part comprising two switches, the steering wheel further comprising a terminal support secured to each screw (8), each terminal support supporting the first terminal (3) of each switch.

12. The vehicle steering wheel according to the preceding claim, wherein each terminal support is clipped onto a screw (8).

13. A motor vehicle comprising a vehicle steering wheel according to one of the preceding claims.

14. A method for assembling a steering wheel according to claim 3, comprising the steps of:
- compressing the elastic return means so as to position the attachment support (2) in the pushed-in position,
- screwing in the screw (8),
- clipping the first contact terminal (3) onto the screw (8) so as to orient the first contact terminal (3) in a predetermined direction,
- releasing the elastic return means so as to close the switch.
